# EUROPEAN PATENT APPLICATION

(11) **EP 4 800 360 A1**
(43) Date of publication of application: **02.09.2026**
(21) Application number: 25305251.8
(22) Date of filing: 26.02.2025
(51) Int. Cl.: G01K 3/00, G01K 7/42

(54) **SMART JOINT PACK MONITOR**

(71) Applicant: Schneider Electric USA, Inc., Boston, MA 02108 (US)
(72) Inventor: COLIN, Bruno, IL 60657 CHICAGO (FR); BUFFAT, Sebastien, 38210 TULLINS (FR)
(74) Representative: Plasseraud IP

(57) **Abstract**

A smart busway joint pack monitor for monitoring the internal temperature of a joint pack. A current sensor measures the current within the busbars, an external temperature sensor measures the ambient temperature, and an internal temperature sensor measures temperature within the joint pack. A monitoring processor receives the measurements and models the temperature of the joint pack based on the ambient temperature and the current measurements. The monitoring processor compares the predicted temperature to the measured internal temperature to determine a status. The monitoring processor transmits and/or visually indicates the temperature status. The monitoring processor receives subsequent measurements to both evaluate the status based on the prediction as well as retrain the model for predicting temperature.

## Description

### BACKGROUND

In general, a busbar is a conductor that serves as a common electrical connection for two or more circuits. For instance, a busbar is a metallic strip or bar commonly found inside switchgear, panel boards, busway enclosures, and the like for collecting electric power from incoming feeders and distributing it to outgoing feeders. The busbar functions as a centralized electrical junction for all incoming or outgoing electrical currents. A busway is an electrical distribution system consisting of busbars in a protective enclosure and includes devices such as isolators and is usually connected to circuit breakers. In the event of a fault, the circuit breaker trips off and disconnects the faulty section of the busbar from the circuit.

### SUMMARY

Aspects of the present disclosure permit smart monitoring of temperatures in electrical distribution components such as rigid load carrying components (e.g., busbars and busways) to detect issues preemptively. A joint pack side plate mounts to the side of a joint pack with sensors and a monitoring processor for monitoring the temperature and electric current flowing through the busway. The sensors collect the e electric current flowing through the busway, an internal temperature of the joint pack, and an ambient temperature. The monitoring processor models the temperature inside the joint pack based upon the ambient temperature, electric current flowing through the busway and pre-established machine learning algorithm. By modeling the temperature, the model predicts the expected temperature, which the monitoring processor compares to the measured temperature to determine deviations.

In one aspect, a system for smart monitoring of electrical distribution equipment, the electrical distribution equipment includes a plurality of electric current carrying components, and the system includes a joint pack side plate configured to mount on a side of a joint pack. The joint pack electrically connects the electric current carrying components to each other. The system also includes a monitoring processor mounted on a printed circuit board assembly (PCBA) attached to the side plate and one or more current sensors configured to measure current in the electric current carrying components. The one or more current sensors are mounted on an interior surface of the side plate and communicatively coupled to the PCBA. The system further includes an internal temperature sensor configured to measure an internal temperature inside the joint pack. The internal sensor is mounted on the interior surface of the side plate and communicatively coupled to the PCBA. The system further includes a memory coupled to the monitoring processor. The memory stores processor-executable instructions executed by the monitoring processor to configure the monitoring processor for receiving an internal temperature signal from the internal temperature sensor. The internal temperature signal indicates the internal temperature measured inside the joint pack. The executed instructions also include receiving an ambient temperature signal. The ambient temperature signal indicates an ambient temperature measured outside the joint pack. The executed instructions further include receiving one or more current measurements from each of the current sensors and executing a temperature prediction engine to generate an internal temperature prediction. Executing the temperature prediction engine includes modeling, by a thermal prediction model, an internal temperature prediction based upon the current measurements and the ambient temperature, wherein the internal temperature prediction is representative of an expected internal joint pack temperature. Executing the temperature prediction engine further includes determining a temperature status based on a difference between the internal temperature prediction and the internal temperature measured inside the joint pack. The system also includes an indicator communicatively coupled to the PCBA and configured to indicate the determined temperature status of the joint pack.

In another aspect, a method of thermal smart monitoring of electrical distribution equipment, the electrical distribution equipment includes one or more electric current carrying components, and the method includes receiving, from an internal temperature sensor, initial internal temperature data indicating an internal temperature of a joint pack connecting the one or more electric current carrying components. The method also includes receiving, from an external temperature sensor, initial ambient temperature data indicating a temperature measured outside of the joint pack and receiving, from one or more current sensors, initial current data of the one or more electric current carrying components measured at the joint pack, wherein the current sensors are electromagnetically coupled to the one or more electric current carrying components and spaced apart from the joint pack. The method further includes processing the initial ambient temperature data and the initial current data as inputs to a thermal prediction model to generate an expected temperature prediction of a temperature within the joint pack and comparing the expected temperature prediction to the initial internal temperature data to determine whether the initial internal temperature deviates from the expected temperature prediction. The method also includes generating a notification based on the determination.

In yet another aspect, a system for smart monitoring of electrical distribution equipment, the electrical distribution equipment includes a plurality of electric current carrying components, and the system includes a joint pack side plate configured to mount on a side of a joint pack. The joint pack electrically connects the electric current carrying components to each other. The system also includes a monitoring processor mounted on a printed circuit board assembly (PCBA) attached to the side plate and one or more current sensors configured to measure current in the electric current carrying components. The one or more current sensors are mounted on an interior surface of the side plate and communicatively coupled to the monitoring processor. The system further includes an internal temperature sensor configured to measure an internal temperature inside the joint pack. The internal sensor is mounted on the interior surface of the side plate and communicatively coupled to the monitoring processor. The system also includes an external temperature sensor configured to measure an ambient temperature. The temperature sensor is mounted on an exterior surface of the side plate and communicatively coupled to the monitoring processor. The system further includes an indicator communicatively coupled to the monitoring processor and configured to indicate a determined temperature status of the joint pack. The monitoring processor is configured to generate the determined temperature status based on the internal temperature inside the joint pack, the ambient temperature, and the current measurements.

Other objects and features of the present invention will be in part apparent and in part pointed out herein.

### BRIEF DESCRIPTION OF THE DRAWINGS

FIG. 1 illustrates a thermal smart monitoring system configured to attach to a joint pack according to an embodiment.
FIG. 2A is a detailed view of the thermal smart monitoring system coupled to a joint pack according to an embodiment.
FIG. 2B is a perspective view of a thermal smart monitoring system attached to a joint pack according to an embodiment.
FIG. 3 is a flow diagram illustrating the process of measuring current load, internal temperature, and ambient temperature to monitor and predict the temperature of a joint pack according to an embodiment.
FIG. 4 is a flow diagram illustrating the process of measuring the internal and external temperature, publishing the measurement, and indicating a temperature status according to an embodiment.
FIG. 5 is a graph illustrating predicting temperature in a joint pack compared to current load on a joint pack according to an embodiment.
FIGS. 6A and 6B illustrate example thermal response curves for predicting an alarm condition according to an embodiment.
FIG. 7 is a flow diagram of an example process for anticipating a possible outage based on a machine learned model according to an embodiment.
FIGS. 8A and 8B illustrate example thermal response curves for determining normality drift according to an embodiment.
FIG. 9 is a flow diagram of an example process for measuring drift from a normality space based on a machine learned model according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

A rise in the operating temperature of a power bus may indicate the presence of corrosion, isolator degradation, or a loss of integrity at mechanical junctions of the bus, potentially creating an operational failure or safety hazard. As a precaution, thermal monitoring solutions are often used at various locations in electrical distribution, including at circuit breakers and connection points or joints between busbars, through various means such as thermal-IR camera or temperature sensors. An ambient temperature sensor may be used for basic busway monitoring to identify when the temperature within a busway exceeds a temperature threshold for safe operation.

Conventional monitoring merely sets a temperature threshold that attempts to provide sufficient warning to address excessive heat conditions in circuit breakers or busways before an operational failure or fire occurs. In systems where adaptive monitoring of temperature occurs based on the electric load carried by the busway, solutions to collect information on the electric current flowing through the busway must be deployed and can result in undesirable costs, complexity or connection to external systems. Further, because conventional monitoring systems require integration into the busway or the joint pack, the monitoring system cannot be easily installed in existing busway systems and new busway systems incur greater costs.

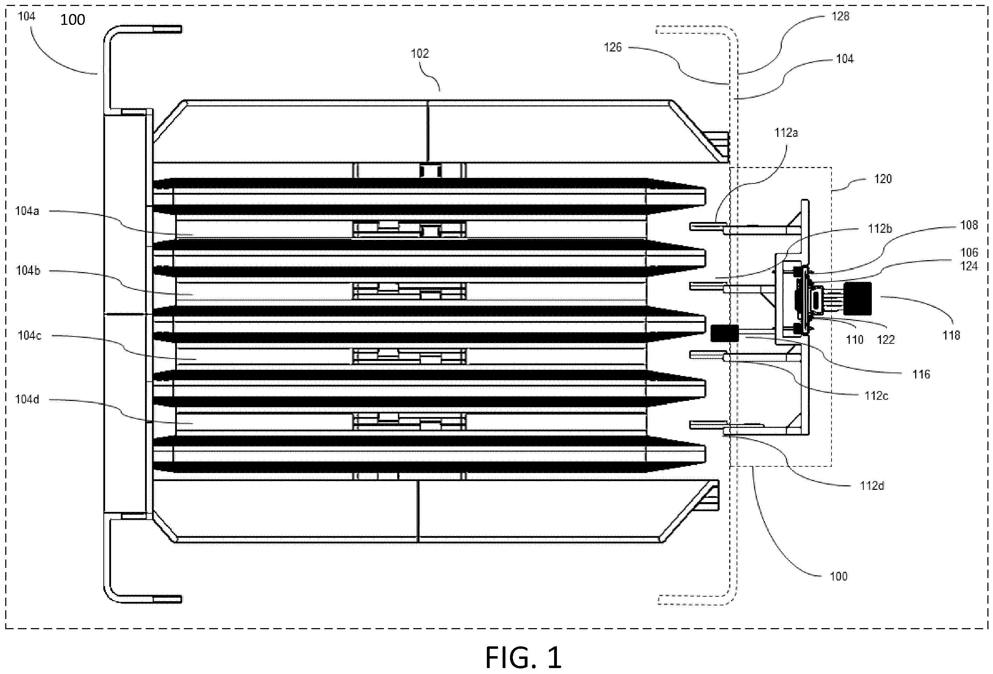

FIG. 1 illustrates a system 100 for a smart busway joint pack monitor. The system 100 allows the monitoring of current and temperature within a joint pack 102 of a busway without requiring an external current sensing device. The joint pack 102 acts as a junction between two sections of the busway allowing for easy installation and expansion of the busway. The system 100 mounts to the joint pack 102 through a joint pack side panel 104, which may be a side plate. In some embodiments, the side panel 104 connects to the joint pack 102. Using a side panel 104 as the base for the system 100 enables the system 100 to be plug- and-play with a joint pack 102 without any additional configuration. A monitoring processor 106 mounted on a printed circuit board assembly (PCBA) 108 mounts to the external surface of the joint pack 102. In one embodiment, the monitoring processor 106 is a microprocessor capable of executing instructions to monitor the temperature and current of the joint pack. In some embodiments, the monitoring processor 106 couples with a memory 124 storing instructions executable by the processor. In some embodiments, a battery 110 couples with the PCBA 108 to provide power to the system 100. In other embodiments, the PCBA 108 receives power through connection with components of the busway. Because the system 100 provides its own power through a battery 110, the system 100 can be readily connected to a joint pack 102 without any further coupling with components of the joint pack 102.

In an embodiment, the monitoring processor 106 receives current measurements from one or more current sensors 112a, 112b, 112c, 112d. The current sensors 112a, 112b, 112c, 112d monitor the flow of electrical current through the busway. In one or more embodiments, the current sensors 112a, 112b, 112c, 112d are Hall-effect current sensors. By using a sensor implementing the Hall-effect, the current of the individual busbars 114a, 114b, 114c, 114d can be measured without physical contact with the busbars 114. In one aspect, the system 100 provides smart monitoring of electrical distribution equipment, which includes a plurality of electric load carrying components, such as busbars 114. The system 100 also includes joint pack 102 configured to electrically connect the electric load carrying components to each other. According to one or more embodiments, the electric load carrying components are rigid.

In one embodiment, the monitoring processor 106 receives an internal temperature measurement of the joint pack 102 from an internal temperature sensor 116. The internal temperature sensor 116 mounts on an interior surface 126 of the joint pack side plate 104. Thus, the internal temperature sensor 116 measures temperature in close proximity to the joint pack 102 and busbars 114a, 114b, 114c, 114d. As a result, the internal temperature sensor 116 accurately measures temperature of the joint pack 102 while heated by the electric current. In some embodiments, the monitoring processor 106 further receives an ambient temperature measurement from an external temperature sensor 118. The external temperature sensor 118 mounts on an exterior surface 128 of the joint pack side plate 104. To accurately measure temperature outside the joint pack 102, the external temperature sensor 118 mounts on the exterior surface 128 of the side plate 104. In one embodiment, the monitoring processor 106 receives the current measurement and temperature measurements from the current sensors 112a, 112b, 112c, 112d, the internal temperature sensor 116, and the external temperature sensor 118 to generate an internal temperature prediction and determine a deviation from the prediction, further described below. In other embodiments, monitoring processor 106 receives measurement data from other sensors such as vibration sensors for monitoring the joint pack 102 and predicting temperature.

The collected temperatures obtained by internal temperature sensor 116 and external temperature sensor 118 located at the bolted connections of busbars 114 may be evaluated to identify problems or potential problems on the busway. For example, if a bolted connection at a joint was not properly torqued at the time of installation, the electrical current through the joint between the busbars 114 (e.g., a vertical busbar and a horizontal busbar) may incur a greater electrical resistance due to the poor physical connection. Over time, the bolted connection may begin to lose contact pressure, leading to further corrosion and overheating, potentially creating an operational failure or safety hazard. The internal temperature sensor 116 and external temperature sensor 118 according to one or more embodiments may be used to sense a rise in the operating temperature of the bolted connection, which could indicate a presence of a contact pressure gap or a loss of integrity at the mechanical junction of the busbars 114.

In some embodiments, the system 100 includes an indicator 120 coupled to the PCBA 108 to indicate a temperature status. In one embodiment, the indicator 120 comprises a light-emitting diode (LED) capable of displaying status colors such as green, yellow, and red. The indicator 120 may be configured to display a green light in response to the internal temperature measurement falling within a predetermined threshold of the internal temperature prediction. The indicator 120 may further be configured to display a yellow or red light if the internal temperature measurement deviates above internal temperature prediction beyond a predetermined threshold. The indicator 120 provides a quick visual indication of the temperature status within the joint pack 102 without requiring further monitoring components. Thus, an operator may walk along a busway system readily inspecting the temperatures of each joint pack 102 to find and isolate thermal issues.

In some embodiments, the system 100 includes a wireless adapter module 122. In one or more embodiments, the wireless adapter module 122 includes a processor and a wireless adapter to transmit the measurement data and internal prediction information to an external monitoring system. In some embodiments, the wireless adapter may use Bluetooth, Wi-Fi, or Zigbee. In one embodiment, the wireless adapter module 122 receives power from the battery 110 mounted to the system 100. In another embodiment, the wireless adapter module 122 connects to power through busway components. In one embodiment, the wireless adapter module 122 transmits data collected from the sensors and receives retraining information for the thermal prediction model, described further below, from an external monitoring system.

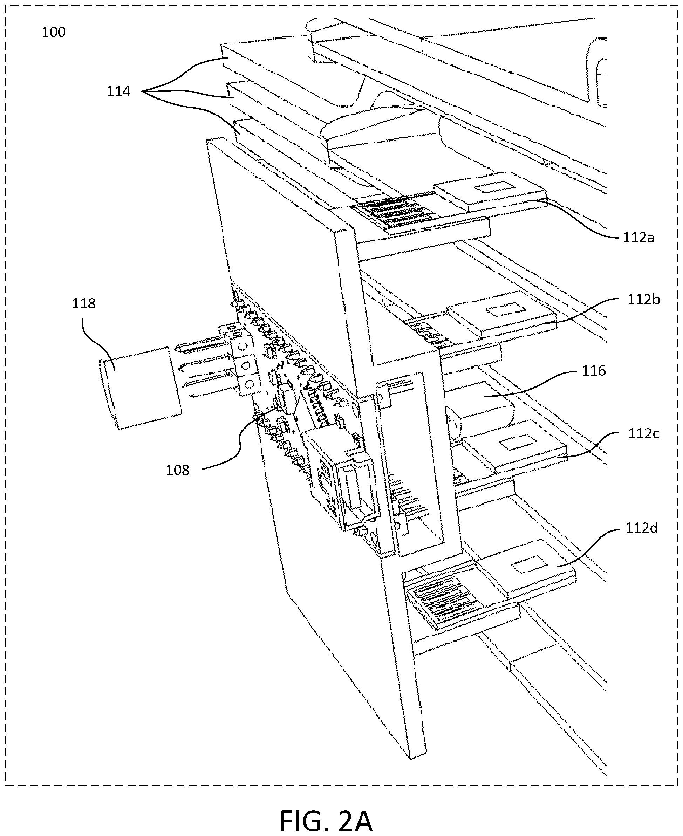

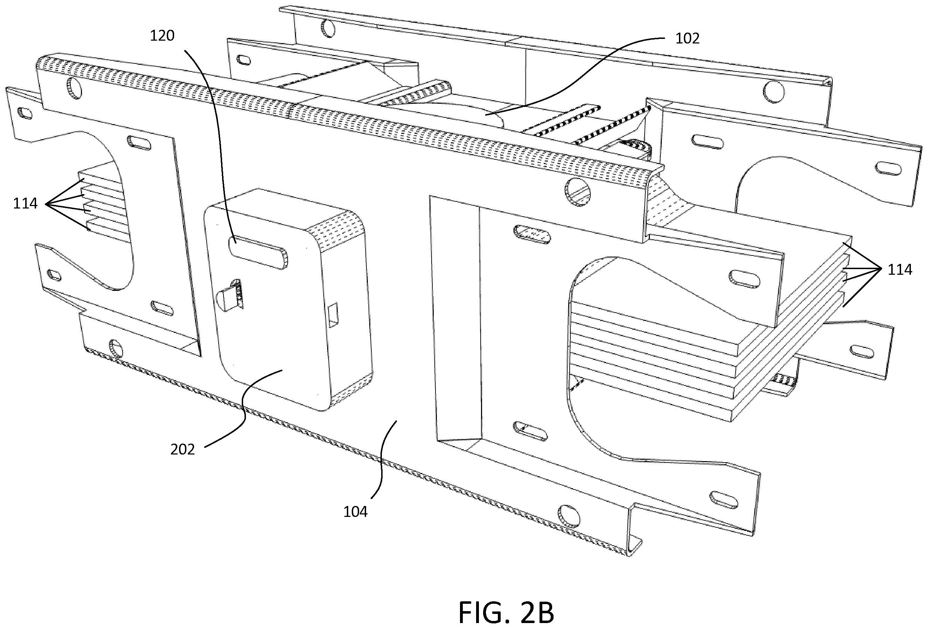

FIG. 2A illustrates a detailed view of the smart busway joint pack monitoring system 100. As shown, the current sensors 112a, 112b, 112c, 112d measure the current without connection to the busbars. Further, the PCBA 108 includes both an internal temperature sensor 116 and an external temperature sensor 118. Thus, the system 100 does not require any physical connection with the joint pack. FIG. 2B is a perspective view illustrating the system 100 mounted to a joint pack 102 connecting busbars 114. As illustrated by FIG. 2B, in some embodiments, a housing 202 attached to a side panel 104. The housing 202 also encloses components of the system such as the monitoring processor 106, PCBA 108, battery 110, and external temperature sensor 118. In other embodiments, the housing 202 further encloses the wireless adapter module 122. In some embodiments, outside the housing the indicator 120 such as an LED shows the temperature status of the joint pack.

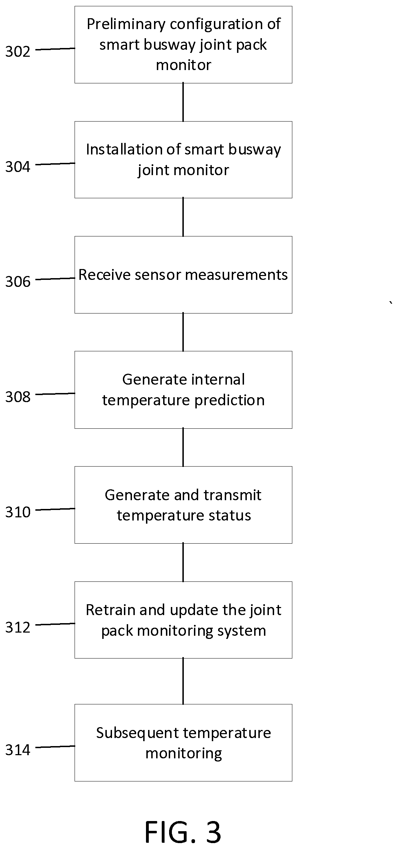

FIG. 3 is a flow diagram illustrating the process of implementing a smart busway joint pack monitor system 100, monitoring the temperature of a busway, and updating the system 100. At step 302, the preliminary steps before installing the system 100 take place. In some embodiments, the smart busway joint pack monitor system 100 is calibrated from load measurement of the joint pack 102. In one embodiment, the system 100 is loaded with a generic temperature model trained on a similar joint pack 102. In one or more embodiments, the operator selects a connectivity option for the system 100. In some embodiments, the smart busway joint pack monitor system 100 connects to other devices wirelessly, such as through Bluetooth or Zigbee. In other embodiments, the system 100 does not connect to any other external devices, only providing a status through the indicator 120.

The smart busway joint pack monitor system 100 is installed onto a joint pack 102 at step 304. In some embodiments, the system 100 is installed into a new greenfield installation by mounting the side panel 104 onto the joint pack 102. In other embodiments, system 100 is installed into a previous, brownfield, installation. In one or more embodiments, the system 100 receives power through a battery 110. and as a result, the system needs no other further connection to the joint pack 102. In yet other embodiments, the system 100 receives power through the joint pack 102 and requires physical connection for power supply. The smart busway joint pack monitor system 100 replaces a side panel such as side panel 104 of the joint pack 102 to seamlessly integrate into the busway. If an operator selects a connectivity option, then the system 100 connects to an existing gateway of the busway system through wireless connectivity.

At step 306, the monitoring processor 106 receives measurements from the sensors of the system 100. In some embodiments, the sensor measurements include an internal temperature measured within the joint pack 102 by an internal temperature sensor 116, an ambient temperature measured outside the joint pack by an external temperature sensor 118, and the current of one or more busbars 114a, 114b, 114c, 114d measured by the current sensors 112a, 112b, 112c, 112d. In some embodiments, the system 100 records the measurements from the sensors locally on a memory coupled to the monitoring processor 106. In other embodiments, the system records the measurements on an external monitoring system transmitted through the wireless adapter module 122.

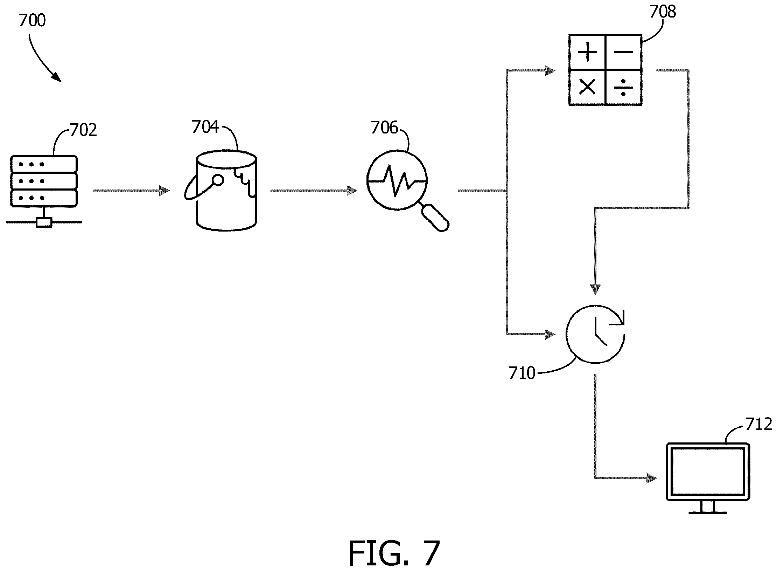

After receiving the measurements, the monitoring processor 106 generates an internal temperature prediction at step 308. In some embodiments, the monitoring processor 106 implements a physics-based model to model the predicted internal temperature of the joint pack 102 based on the ambient temperature and the current measurements. In one embodiment, the physics based model is created before the installation of the system 100 based on general joint pack information. In other embodiments, the monitoring processor 106 implements a machine learning model that trains on the joint pack's historical current information and historical temperature information to generate a prediction of the internal temperature of the joint pack 102. In some embodiments, the monitoring processor 106 generates both a present predicted internal temperature and a model of future temperature within the joint pack 102 based on predicted load information, see FIG. 7, further described below. The predicted load information may be generated based on historical load information such as days or time windows where the load is expected to increase or decrease.

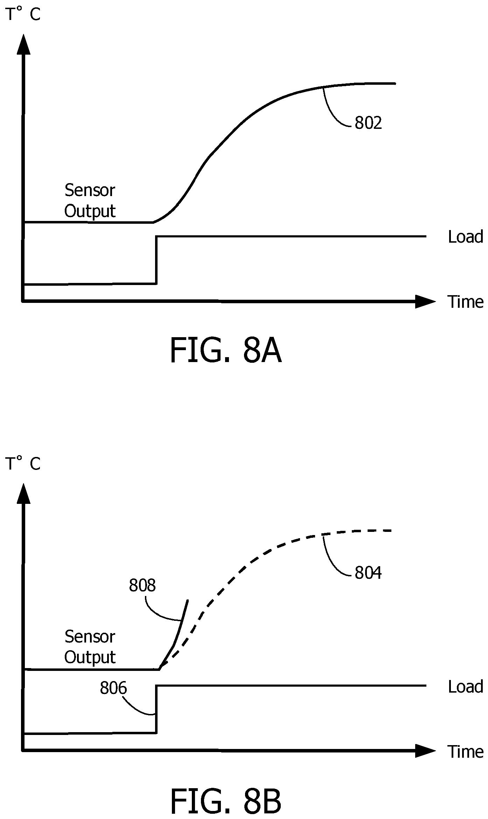

At step 310, after generating the predicted temperature, the monitoring processor 106 generates and transmits a temperature status. In some embodiments, the monitoring processor 106 compares the internal temperature measurement with the internal temperature prediction to determine if there is deviation beyond a predetermined threshold. In some embodiments, the predetermined threshold is configured by a user on the monitoring processor 106. In other embodiments, the predetermined threshold is determined by historical load and historical temperature data for the joint pack 102. In an embodiment, the monitoring processor 106 transmits the temperature status to the indicator 120. Then the indicator 120 displays a light to indicate the status of the temperature within the joint pack 102. In another embodiment, the monitoring processor 106 transmits the temperature status to the wireless adapter module 122 to forward the temperature status and measurement information to an external monitoring system. For example, if the temperature deviates more than five degrees Celsius, the indicator 120 shows a red light, and optionally an alert may be transmitted to the external monitoring system to indicate a high heat status, see also FIG. 8A, further described below. The external monitoring system may include input and output devices enabling an operator to view the temperature status and measurement information of one or more joint packs 102. Further, the external monitoring system may enable the operator to configure thresholds for alarming temperature changes within one or more joint packs 102.

The system 100 retrains and updates based on information collected from sensor measurements over time, at step 312. In some embodiments, the system 100 provides a status on the indicator 120 or an alert through the external monitoring system if the temperature exceeds the predicted temperature beyond a threshold for an extended period of time through subsequent internal and external temperature monitoring. For example, the external monitoring system may recommend checking the joint pack 102 installation if the temperature measured regularly exceeds the predicted temperature by two degrees Celsius over a period of months. In one embodiment, the operator provides feedback on the installation status. If the joint pack 102 was correctly installed, the prediction model updates based on the temperature consistently measuring higher than the prediction despite no installation issues. As a result, the model changes to fit the joint pack 102 environment to ensure accurate predictions.

In some embodiments, the temperature prediction model retrains based on load and temperature measurement information. In some embodiments, the monitoring processor 106 generates training data for the machine learning model generating temperature predictions. In one embodiment, the external monitoring system transmits training data or an updated model to the monitoring processor 106 through the wireless adapter module 122. In some embodiments, the external monitoring system stores previous measurement load and temperature data for a joint pack 102 to create training data. In an embodiment, the training data is used to generate new weights of the temperature prediction model, which are then the parameters are transferred to the monitoring processor 106 for updating the model. Based on the updated model, the predetermined threshold for updating the indicator 120 or transmitting a status may be narrowed by the operator or automatically. For example, after monitoring for more than six months, the indicator 120 turns red for a temperature exceeding the prediction by two degrees Celsius rather than five degrees. Similarly, the external monitoring system receives an alert for the minor deviation. Because the system 100 adapts through the training of the model and updated thresholds, the system 100 more quickly notifies operators of temperature changes within the joint pack 102.

Following or simultaneous with retraining and updating the model, the system 100 continues to monitor temperature and current at step 314. The monitoring processor 106 continuously monitors current and temperature to determine if there is a deviation from the predicted internal temperature, see FIGs. 8A and 8B, further described below. Thus, the system 100 responds quickly to changes in current or internal temperature measurement.

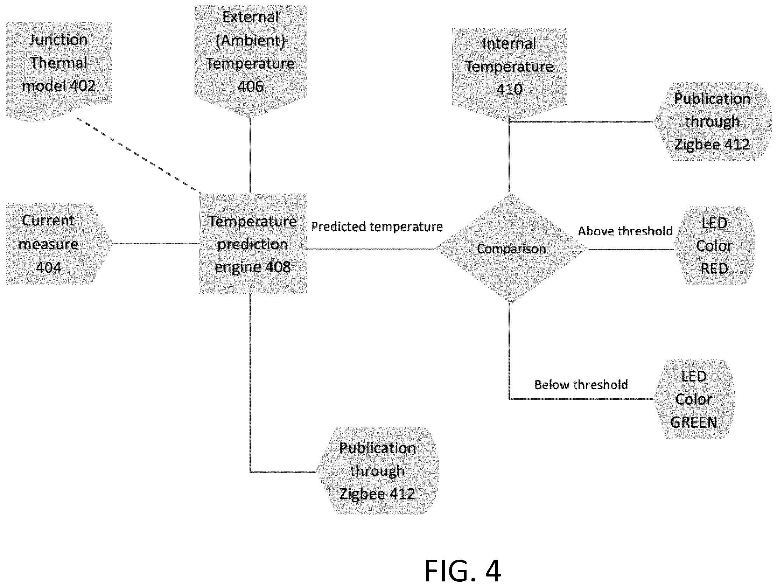

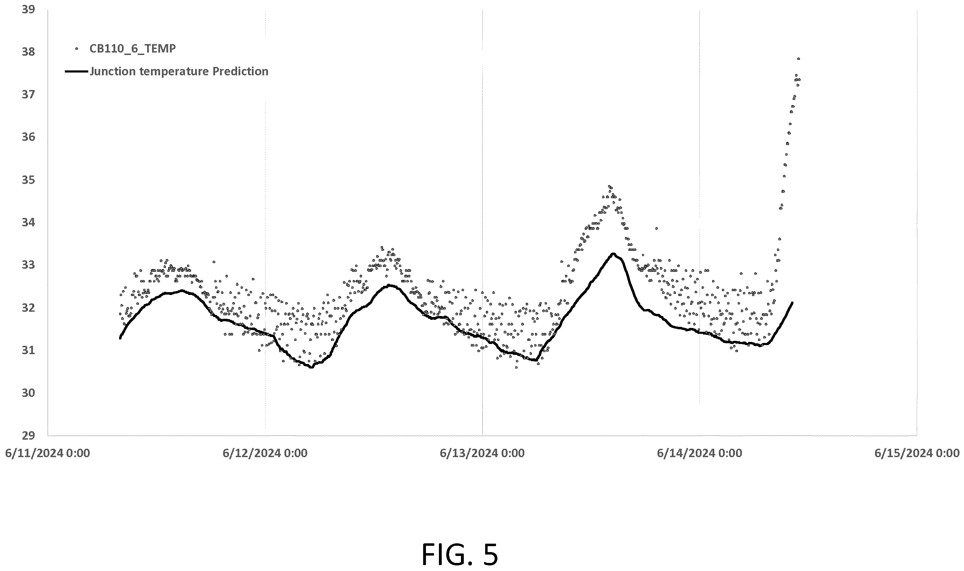

FIG. 4 is a flow diagram illustrating aspects of the measuring temperature and publishing the prediction and internal temperature measurement. A junction thermal model 402 generates a prediction of the internal temperature based on an input current measurement 404 of the joint pack 102 and an external temperature measurement 406. In an embodiment, monitoring processor 106 executes a temperature prediction engine 408 to generate an internal temperature prediction for joint pack 102. Executing the temperature prediction engine 408 includes modeling, by a thermal prediction model, an internal temperature prediction based upon the current measurements 404 and the ambient temperature 406. The internal temperature prediction is representative of an expected internal joint pack temperature in this embodiment. FIG. 5 illustrates a graph showing a prediction of internal temperature using the temperature prediction engine 408 compared to the measured internal temperature.

Executing the temperature prediction engine 408 further includes determining a temperature status based on a difference between the internal temperature prediction and the internal temperature 410 measured by internal temperature sensor 116 inside joint pack 102. In some embodiments, the temperature prediction is published through a Zigbee (or other wireless communication) module 412 along with the internal temperature measurement. The internal temperature measurement is compared to the predicted temperature measurement to determine an LED status. As described above, system 100 also includes an indicator 120 communicatively coupled to PCBA 108 and configured for indicating the determined temperature status of joint pack 102. For example, if the predicted temperature matches or exceeds the measured temperature, then the LED turns green. If the measured temperature exceeds the predicted temperature above a threshold, for example five degrees Celsius, then the LED turns red indicating a high heat status.

Use Case A: Prediction of operation conditions.

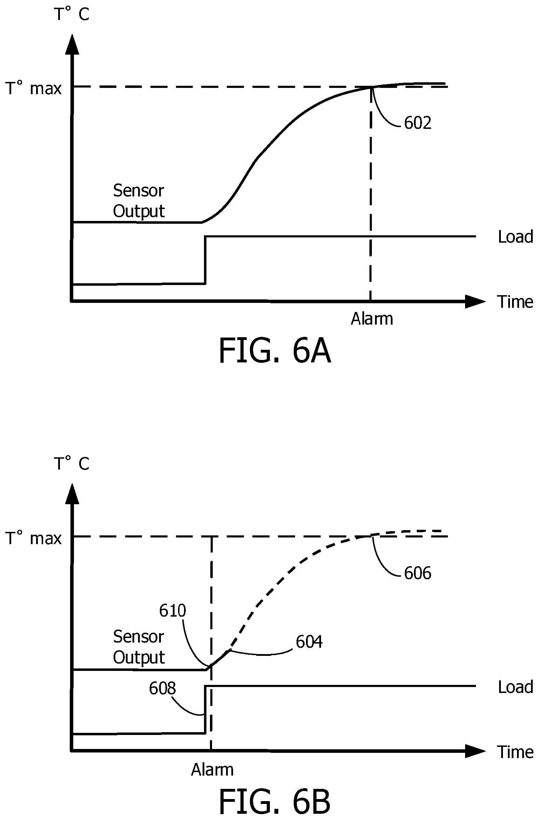

Referring to FIG. 6A, an example of conventional thermal threshold alarming is shown. When the monitored temperature exceeds a threshold Tmax indicating detection of excessive temperature, an alarm is generated at 602.

FIG. 6B illustrates an example of predictive alarm management in accordance with one or more embodiments. In this example, limited to temperature for the simplicity of the example, but including ambient temperature in one or more embodiments, monitoring processor 106 learns the relationship between load and temperature by monitoring temperature measurements as a function of load and then modeling the temperature, beginning at 604, to predict when the temperature will exceed Tmax at 606. Using the machine learned model, monitoring processor 106 is able to predict the temperature response to a new electric current at 608 and generate an alarm at 610 anticipating the excessive temperature condition. In this manner, aspects of the present disclosure permit a much longer window of time for evaluating and possibly resolving the problem before it becomes critical.

In addition, the machine learned model permits preventive alarm management. The model learns load patterns (e.g., evaluation of days / times / events triggering high load, such as every Monday morning or during generator test runs) and can generate an alarm before a load increase. In this manner, the model anticipates condition in response to load changes and provides alerts before a condition becomes problematic.

FIG. 7 illustrates an example process 700 for predicting a future state in conjunction with a busway junction pipeline to illustrate further aspects of Use Case A, described above. Beginning at 702, monitoring processor 106 receives data from sensors for collecting a data set including, for example, time, electric current load, ambient temperature, and internal joint pack temperature. To improve data processing and speed, the collected data is consolidated at regular intervals (e.g., 1 hour), as indicated by a data bucket at 704. The monitoring processor 106 executes a machine learning regression algorithm at 706 to establish a specific model for every monitored junction. At 708, the parameters of the machine learned model are stored as an initial normality space and, at 710, monitoring processor 106 establishes a prediction of temperature and vibration over the next 24 hours, for example, based on the model and live data. The monitoring processor 106 compares the live temperature and vibration data to the prediction at 712. If the predictions indicate values exceeding pre-established thresholds, an alarm is generated.

Use Case B: Detection of behavior drift.

Referring to FIG. 8A, an example of conventional thermal behavior of application is shown at 802 (similar to FIG. 6A).

FIG. 8B illustrates an example of predictive alarm management in accordance with one or more embodiments. In this example, limited to temperature for the simplicity of the example, but including ambient temperature in one or more embodiments, monitoring processor 106 learns the relationship between load and temperature by monitoring temperature measurements as a function of load, and identifies when the measured (thermal) behavior differs from the expected or usual pattern. Using the machine learned model, monitoring processor 106 is able to predict the temperature response to a new load at 804. If in response to a new load at 806, the measured thermal behavior deviates significantly from the prediction, as indicated at 808, an alarm is generated based on this change of behavior and a maintenance request may be put in. In this manner, the machine learning of monitoring processor 106 observes the relationship between load and temperature and compares the observed to predicted to identify abnormal conditions.

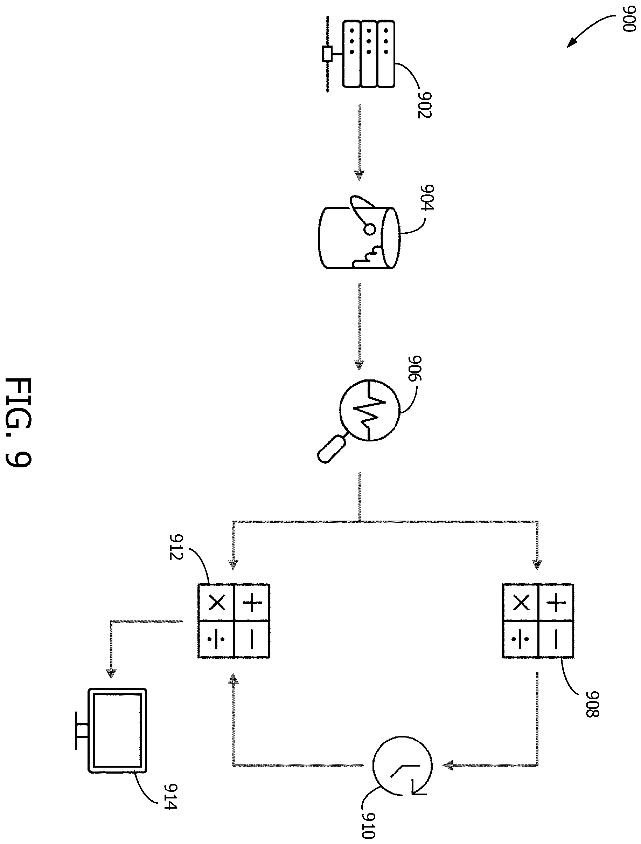

FIG. 9 illustrates an example process 900 for determining normality space drift in conjunction with a busway junction pipeline to illustrate further aspects of Use Case B, described above. Beginning at 902, monitoring processor 106 receives data from current sensors 112a, 112b, 112c, 112d, internal temperature sensor 116, and external temperature sensor 118 for collecting a data set including, for example, time, electric current load, ambient temp, and internal junction temperature. To improve data processing and speed, the collected data is consolidated at regular intervals (e.g., 1 hour), as indicated by a data bucket at 904. The monitoring processor 106 executes a machine learning regression algorithm at 906 to establish a specific model for every monitored junction. At 908, the parameters of the machine learned model are stored as an initial normality space and, at 910, monitoring processor 106 establishes a prediction of temperature and vibration based on live load, time, and ambient conditions data. At 912, the process 900 operates on the model and live data. The monitoring processor 106 compares the live temperature and vibration data to the prediction at 914. If the comparison reveals drift exceeding pre-established thresholds, an alarm is generated.

Additional examples A, B, C and D are described below:
Example A: A system for smart monitoring of electrical distribution equipment, the electrical distribution equipment including a plurality of electric current carrying components and a joint pack connecting the electric current carrying components to each other, the system comprising:
a joint pack side plate configured to mount on a side of the joint pack;
a monitoring processor on a printed circuit board assembly (PCBA) attached to the side plate;
one or more current sensors configured to measure current in the electric current carrying components, the one or more current sensors mounted on an interior surface of the side plate and communicatively coupled to the monitoring processor;
an internal temperature sensor configured to measure an internal temperature inside the joint pack, the internal sensor mounted on the interior surface of the side plate and communicatively coupled to the monitoring processor;
an external temperature sensor configured to measure an ambient temperature outside the joint pack, the temperature sensor mounted on an exterior surface of the side plate and communicatively coupled to the monitoring processor; and
an indicator communicatively coupled to the monitoring processor and configured to indicate a determined temperature status of the joint pack, wherein the monitoring processor is configured to generate the determined temperature status based on the internal temperature inside the joint pack, the ambient temperature, and the current measurements.

Example B: The system as set forth in Example A, wherein the one or more current sensors comprise at least one Hall-effect current sensor.

Example C: The system as set forth in Example A or Example B, further comprising a wireless adapter module coupled to the PCBA, wherein the wireless adapter module is configured for transmitting the internal temperature, the ambient temperature, and the current measurements to an external monitoring processor.

Example D: The system as set forth in any one of Examples A, B or C, further comprising:
a battery configured to supply power to at least one of the monitoring processor, the one or more current sensors, the internal temperature sensor, or the external temperature sensor.

Commonly assigned U.S. Non-Provisional Patent Application No. 18/665,193, filed May 14, 2024, discloses a thermal smart monitoring and outage prevention. Sensors provide temperature data, which a diagnostics processor process to predict a response to the electrical load. The processor then processes subsequent measurement data to determine whether the sensor deviates from the prediction. Then the processor generates an electronic or visual notification based on the determination.

Aspects of the present disclosure permit monitoring of temperatures in circuit breakers and busways. A machine learned model determines a thermal normality space and monitors the drift of a circuit breaker or a busway to predict degradations in a circuit breaker or in a busway. The machine learned model further determines busway degradation from environmental factors (presence of external heat sources, dust accumulation creating a thermal barrier, gradual torque degradation, etc.). By modeling temperature as a function of ambient conditions and load, the machine learned model predicts what would be normal expected temperature associated with busbars and circuit breakers based on the measured ambient conditions and load. Monitoring the drift from normal allows detection of abnormalities in a faster and more accurate way than traditional threshold based monitoring.

Although described with respect to busbars and busways, it is to be understood that aspects of the present disclosure permit thermal smart monitoring of any electric load carrying component having a joint pack connection.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. A system for smart monitoring of electrical distribution equipment, the electrical distribution equipment including a plurality of electric current carrying components and a joint pack connecting the electric current carrying components to each other, the system comprising:
a joint pack side plate configured to mount on a side of the joint pack;
a monitoring processor on a printed circuit board assembly, PCBA, attached to the side plate;
one or more current sensors configured to measure current in the electric current carrying components, the one or more current sensors mounted on an interior surface of the side plate and communicatively coupled to the PCBA;
an internal temperature sensor configured for measuring an internal temperature inside the joint pack, the internal temperature sensor mounted on the interior surface of the side plate and communicatively coupled to the PCBA;
a memory coupled to the monitoring processor, the memory storing processor-executable instructions that, when executed, configure the monitoring processor for:
receiving an internal temperature signal from the internal temperature sensor, the internal temperature signal indicative of the internal temperature measured inside the joint pack;
receiving an ambient temperature signal indicative of an ambient temperature measured outside the joint pack;
receiving one or more current measurements from each of the current sensors;
executing a temperature prediction engine to generate an internal temperature prediction, wherein executing the temperature prediction engine comprises:
modeling, by a thermal prediction model, the internal temperature prediction based upon the current measurements and the ambient temperature, wherein the internal temperature prediction is representative of an expected internal joint pack temperature;
determining a temperature status based on a difference between the internal temperature prediction and the internal temperature measured inside the joint pack; and
an indicator communicatively coupled to the PCBA and configured to indicate the determined temperature status of the joint pack.

2. The system as set forth in claim 1, wherein the one or more current sensors comprise at least one Hall-effect current sensor.

3. The system as set forth in claim 1 or claim 2, wherein the memory coupled to the monitoring processor stores processor-executable instructions that, when executed, further configure the monitoring processor for:
receiving a subsequent internal temperature signal from the internal temperature sensor, the subsequent internal temperature signal indicative of a subsequent internal temperature measured inside the joint pack;
receiving one or more subsequent current measurements from the current sensors;
determining an updated temperature status based on the subsequent internal temperature measured inside the joint pack, the subsequent current measurements, and the internal temperature prediction; and
transmitting the determined updated temperature status to the indicator.

4. The system as set forth in any one of claims 1 to 3, wherein the thermal prediction model comprises:
a physics-based model based on joint pack information; or
a machine learning model trained on historical joint pack load information and historical joint pack temperature information.

5. The system as set forth in claim 4, wherein the memory coupled to the monitoring processor stores processor-executable instructions that, when executed, further configure the monitoring processor for:
storing the internal temperature, the ambient temperature, the current measurements, and the internal temperature prediction; and
retraining the temperature prediction engine based upon the internal temperature, the ambient temperature, the current measurements, and the internal temperature prediction.

6. The system as set forth in any one of claims 1 to 5, further comprising:
a wireless adapter module coupled to the PCBA;
wherein the memory coupled to the monitoring processor stores processor-executable instructions that, when executed, further configure the monitoring processor for:
transmitting, through the wireless adapter module, the internal temperature, the ambient temperature, the current measurements, and the internal temperature prediction to an external monitoring system;
receiving, from the external monitoring system, a set of parameters for updating the temperature prediction engine; and
updating the temperature prediction engine with the received parameters.

7. The system as set forth in claim 6, wherein the memory coupled to the monitoring processor stores processor-executable instructions that, when executed, further configure the monitoring processor for:
alerting a high heat status, on a display of the external monitoring system, in response to the internal temperature measured inside the joint pack exceeding the internal temperature prediction by a predetermined threshold.

8. The system as set forth in any one of claims 1 to 7, wherein the indicator is configured to display a red light in response to the difference between the internal temperature prediction and the internal temperature measured inside the joint pack exceeding a predetermined threshold.

9. The system as set forth in any one of claims 1 to 8, further comprising an external temperature sensor configured for measuring the ambient temperature outside of the joint pack, the external temperature sensor mounted on an exterior surface of the side plate and communicatively coupled to the PCBA.

10. The system as set forth in claim 9, further comprising:
a battery configured to supply power to at least one of the monitoring processor, the one or more current sensors, the internal temperature sensor, or the external temperature sensor.

11. A method of thermal smart monitoring of electrical distribution equipment, the electrical distribution equipment including one or more electric current carrying components and a joint pack connecting the electric current carrying components to each other, the method comprising:
receiving, from an internal temperature sensor, initial internal temperature data indicating an internal temperature of the joint pack;
receiving, from an external temperature sensor, initial ambient temperature data indicating a temperature measured outside of the joint pack;
receiving, from one or more current sensors, initial current data of the one or more electric current carrying components measured at the joint pack, wherein the current sensors are electromagnetically coupled to the one or more electric current carrying components and spaced apart from the joint pack;
processing the initial ambient temperature data and the initial current data as inputs to a thermal prediction model to generate an expected temperature prediction of a temperature within the joint pack;
comparing the expected temperature prediction to the initial internal temperature data to determine whether the initial internal temperature deviates from the expected temperature prediction; and
generating a notification based on the determination.

12. The method as set forth in claim 11, further comprising:
receiving, from the internal temperature sensor, subsequent internal temperature data indicating a subsequent temperature of a joint pack during operation of the electrical current;
receiving, from the current sensors, subsequent current data of the one or more electric current carrying components during operation of the electrical current; and
processing the subsequent internal temperature data and the subsequent current data to determine whether the subsequent temperature data and the subsequent current data significantly deviates from the expected temperature prediction.

13. The method as set forth in claim 11 or claim 12, wherein the thermal prediction model comprises a machine learning model trained on historical temperature information and historical load information.

14. The method as set forth in claim 13, further comprising:
storing the initial internal temperature data, the initial ambient temperature data, the initial current data, and the expected temperature prediction; and
retraining the thermal prediction model based upon the stored initial internal temperature data, the initial ambient temperature data, the initial current data, and the expected temperature prediction.

15. The method as set forth in any one of claims 11 to 14, wherein processing the initial ambient temperature data and the initial current data comprises executing the thermal prediction model by a monitoring processor communicatively coupled to the current sensors, and further comprising:
transmitting, via a wireless adapter communicatively coupled to the monitoring processor, the initial internal temperature data, the initial ambient temperature data, the initial current data, and the expected temperature prediction to an external monitoring system; and
displaying, via the external monitoring system, the initial internal temperature data, the initial ambient temperature data, the initial current data, and expected temperature prediction.
